# EUROPEAN PATENT APPLICATION

(11) **EP 4 571 319 A1**
(43) Date of publication of application: **18.06.2025**
(21) Application number: 23216205.7
(22) Date of filing: 13.12.2023
(51) Int. Cl.: G01N 35/10

(54) **FLUID DELIVERY SYSTEM FOR CHEMICAL ANALYSIS SYSTEM**

(71) Applicant: ABB SCHWEIZ AG, 5400 Baden (CH)
(72) Inventor: REDFERN, Adam, Gloucester, GL2 8NE (GB); DOE, William, Bristol, BS3 5BJ (GB); LOVELESS, Edis, Bristol, BS5 0HP (GB); CARR, Benjamin, Gloucestershire, GL5 1ST (GB); KNIGHT, Kenton, Gloucester, GL4 4WB (GB)
(74) Representative: Maiwald GmbH

(57) **Abstract**

The invention relates to a fluid delivery system (200) for a chemical analysis system having a measuring cell (10) that comprises at least one inlet (11) and configured to allow a fluid to be measured when flowing into the measuring cell (10) via the at least one inlet (11). The fluid delivery system (200) comprises at least one first valve (210) arranged at the at least one inlet and a pumping system (220) comprising a pump (225) configured to aspirate the fluid and draw the fluid into the measuring cell from the at least one inlet. The at least one first valve (210) is configured to be opened for allowing the fluid being aspirated and drawn into the measuring cell via the at least one inlet. The fluid may pass through the pump, or, in the case of a syringe pump, be retained within the pump for later discharge.

## Description

### FIELD OF INVENTION

The present disclosure relates to automation of chemical analysis processes. In particular, the present disclosure relates to a fluid delivery system for a chemical analysis system, a chemical analysis system comprising a fluid delivery system, the use of a fluid delivery system and a method for operating a fluid delivery system for a chemical analysis system.

### BACKGROUND

Fluid delivery systems are widely used in automatic chemical analysis systems such ascolorimetric analyzers and titrators. For example, when multiple peristaltic pumps are used to push fluids at defined rates into a measurement cell. Further where multiple fixed-displacement solenoid dosing pumps are used to push fluids at defined rates into a measurement cell. Further, a syringe pump may aspirate fluids into itself wherein the syringe barrel has a dual purpose of pump and measurement cell. Further, a single-motor multi-channel peristaltic pump may be used to push multiple reagents into a measurement cell simultaneously without individual control of each reagent, therefore without enabling variable dispense ratios or individual reagent dispense. Therefore, it may be an inflexible system having a single purpose, which cannot be easily adaptable, for example to add additional reagents or fluids. Further, where multiple syringe pumps are used to dispense reagents into a measurement cell. his may be costly and expensive as multiple individual pumps are typically deployed for the purpose. For example, the multiple-syringe pumps may also need sufficient construction space due to duplicates of the pump hardware including, for example, multiple syringes, motor drivers and a rotary to a linear motion converter, in the system setup.

Additionally, when dispensing multiple fluids with a single pump, cross-contamination of fluids can occur in shared volumes, not limited to pump internal volume and surfaces, tubing, valves, and manifolds. This may result in inaccurate chemical measurements. Hence there is often a requirement for multiple pumps to move multiple fluids, rather than use of a single shared pump.

### SUMMARY

It may be seen as an objective of the invention to provide an an alternative fluid dispense system for use in analytical instruments such as colorimetric analysers and titrators.

The objective is achieved by the subject matter of the independent claims. The dependent claims, the following description and the drawings show embodiments of the invention.

According to a first aspect of the present, a fluid delivery system is provided for a chemical analysis system that comprises a measuring cell, which comprises at least one inlet and configured to allow a fluid to be measured when flowing into the measuring cell via the at least one inlet. The fluid delivery system comprises at least one first valve and a pumping system that comprises a pump. The at least one first valve is arranged at the at least one inlet of the measuring cell, while the pumping system with the pump is arranged at the outlet of the measuring cell.

The pump of the pumping system is configured to aspirate the fluid and draw the fluid into the measuring cell from the at least one inlet. The at least one first valve is configured to be opened for allowing the fluid being aspirated and drawn into the measuring cell via the at least one inlet.

Further, the pumping system with the pump may be arranged at the outlet of the measuring cell, such that the fluid from the at least one first valve as inlet valve may be aspirated into the measuring cell. The pumping system may be situated at an outlet of the measuring cell, connected directly to the measuring cell, or connected in any other appropriate manner to enable the aspiration of the fluid to occur. For example, the measuring cell may be a cuvette or a flow cell having a rectangular or cylindrical shape, and comprise a first end at a first side and a second end at a second side. The at least one inlet may comprise one or a plurality of inlets. As an example, all inlets may be provided at the first end or the first side of the measuring cell, while the outlet may be provided at the second end or the second side of the measuring cell. Alternatively, the pumping system with the pump may be connected to one of the at least one inlet of the measuring cell within the pressure boundary created by the connected first valve or inlet valve.

The measuring cell may comprise a measurement volume within the chemical analyser. For example, the pumping system consisting of one pump may be positioned on the outlet of the measurement cell such that all fluids are aspirated from the at least one inlet through the measurement cell, through the pump, and into the outlet. Alternatively, it could be situated on one of the inlets between the inlet valve and the measurement cell, such that all fluids except the one whose valve it is connected adjacent to can be aspirated into the measurement cell. In this case, the fluid whose valve the pump is situated adjacent to may not be aspirated by the pump through the cell, but be moved into the cell by other means, for example due to its own fluid pressure.

This arrangement is advantageous as if certain mechanical arrangement criteria are met, it means that only the fluid whose valve the pump is situated adjacent to may pass through the pump. For example, this fluid could be water, and the fluids attached to the at least one other inlets could be aggressive reagents, this arrangement may prevent passage of aggressive reagents into the pump.

According to an embodiment, the pumping system comprises a single pump.

In other words, the single pump of the pumping system may serve as a common pump for the multiple first valves, via which various fluids may be aspirated into the measurement volume of the measuring cell by means of the single pump. It may be noted that the mechanical layout of the measurement cell and the valve connections at the inlets and the valve and pump connection at the outlet may be designed so that all air may be expelled from the system and displaced by the fluid or liquid.

Compared to the conventional fluid control system, in which an individual pump is provided for each of the fluids to be dispensed, the pump of the prevent disclosure may be positioned such that the fluid may be aspirated into the measuring cell, rather than dispensed into the measuring cell. In other words, the fluid to be measured may be drawn into rather than pushed into the measuring cell. This may mandate a pressure sealed system devoid of air to ensure accurate volumetric aspiration. This may also require the positioning of the fluid connections into the measurement cell to be positioned such that a fluid is not directly aspirated into the pump. For example, positioning the fluid inlets on the opposite side of the cell from the pump. Further, this may mandate a mechanical arrangement such to prevent direct aspiration of fluids from an inlet into the pump. For example, by positioning pump and inlets at opposite ends of the measurement volume.

Advantageously, the fluid delivery system using the single pump may be configured to aspirate any number of fluids, simultaneously or in sequence. Adding a fluid via any first valve may mandate the addition of a single valve per fluid.

Furthermore, since the pump may be situated such that aspirated fluids may be drawn through the measurement cell, any cross contamination of fluids within the pump may be irrelevant to any measurement taken within the measurement cell since the fluids have already passed through the measurement cell before they come into contact with the shared pump.

Moreover, the fluid delivery system may also enable individual control of the aspiration of different quantities of the fluid, which may be beneficial for diagnostic purposes or enable a colorimetric method, a titrimetric method, a variable dilution and so on, to be carried out using the similar design and hardware construction.

According to another embodiment, the at least one first valve may be a solenoid valve, a pneumatic valve or a diaphragm valve.

The term of the valve may be understood broadly as a mechanical device that may be used to control the flow of a fluid, directing the flow of the fluid to a certain path or chamber. A solenoid valve may be an electromechanical device that may use an electromagnetic coil to control the flow of fluids, typically liquids or gases, by opening or closing a valve mechanism. A pneumatic valve may be a device that may regulate the flow of air or gas through a system using pneumatic or compressed air pressure to actuate its valve mechanism. A diaphragm valve may be a type of valve that may use a flexible diaphragm to control the flow of fluids, making it suitable for applications requiring precise and sanitary fluid control. However, it may be noted that the first valve may not be limited to the above listed valve types.

According to another embodiment, the at least one inlet may comprise a plurality of inlets and the at least one first valve may comprise a plurality of first valves. Each of the plurality of first valves may be arranged at one of the plurality of inlets.

Each of the plurality of first valves may be provided for a sample liquid or a reagent liquid. The fluid may comprise at least one liquid, which may be the sample liquid, the reagent liquid and/or a mixture liquid of the sample liquid and the reagent liquid. The fluid may be, but not limited to, a pressurized fluid from a pipe or tank, a bottle of fluid at atmospheric pressure.

The plurality of the first valves may be used in such a way that one valve per fluid to be aspirated are provided in the fluid delivery system.

The term of the sample liquid may be understood broadly as a substance in a solution that may be analyzed or tested under investigation.

The term of the reagent liquid may be understood broadly as a substance in a solution that may be introduced into a chemical reaction with a specific substance of a sample liquid to facilitate a specific chemical change. A reagent liquid may typically comprise a known composition and may be used to test for the presence or concentration of the specific substance of the sample liquid.

The term of the mixture liquid may be understood broadly as a combination of two or more different liquids in which the individual components are physically intermingled and/or chemically reacted with each other.

For example, the pump may be, but not limited to, a solenoid dosing pump, a syringe pump, a vacuum pump, a peristaltic pump or a metered or fixed-volume pump.

The term of the pump may be understood broadly as a mechanical device that may transfer or move fluids or liquids, from one place to another by generating pressure or creating a flow. A solenoid dosing pump may be a precise liquid delivery device that may use an electromagnetic solenoid to dispense controlled volumes of fluids, commonly employed for accurate chemical dosing. A syringe pump may be a device that may deliver precise and controlled volumes of a liquid using a motorized syringe, often used in laboratory and medical settings. A vacuum pump may be a machine designed to create a vacuum or lower pressure within a sealed system by removing air and other gases, used in various applications, including laboratory work, industrial processes, and air conditioning systems. A peristaltic pump may be a type of pump that may use rotating rollers or "shoes" to compress and release a flexible tube, moving fluids without contact with the pump components, commonly chosen for precise and contamination-free liquid transfer.

It may be noted that the type of the pump may not be limited to the above listed pumps. For example, a syringe pump may be selected due to the relatively high accuracy and the stability compared to other pump types. The mechanical arrangement for the syringe pump may differ to that for other pump types since the syringe pump aspirated fluid into a volume within itself which must later be dispensed, whilst other pump types continuously aspirate and dispense.

By using the pump, the fluid aspirated into the volume may be pressurized or depressurized, as the fluid are relatively incompressible. Accordingly, this may not affect a ratio of a dispensed volume to a mass.

According to another embodiment, the pumping system may further comprise a second valve, which may be configured to allow the pump being disconnected from the measuring cell and/or being isolated from the fluid delivery system.

The second valve may be designed as a pump isolation valve. For example, the second valve may be provided between the outlet of the measuring cell and the pump. Hence, the second valve may be arranged with the pump at the same side or the same end of the measuring cell, which may be at the outlet or the downstream side of the measuring cell.

According to another embodiment, the pumping system may further comprise a third valve, which is configured to allow the pump being emptied for disconnecting the pump from the measuring cell and/or for isolating the pump from the fluid delivery system and/or for allowing the fluid to bypass the pump (225).

Optionally, The third valve may be designed as a pump emptying valve. The both second and third valves may be arranged at the downstream side or the outlet side of the measuring cell, while all the first valves may be arranged at the opposite, upstream side or the inlet side of the measuring cell. Alternatively, the second and third valves may be connected to the measuring cell in any other way. The measurement cell between the valve seats of the first, second and third valves and the pump may form a pressure boundary. The mechanical layout of the measuring cell and the valve or pump connection points may be designed so that all air may be expelled from the fluid delivery system and displaced by a liquid. As such, due to the incompressibility of the fluid, any volumetric aspiration by using the pump may result in the same volume of the fluid being drawn in via any open first valve.

According to another embodiment, the second valve or the third valve may be a same type of valve as or a different type of valve than the at least one first valve.

According to another embodiment, the pump of the pumping system may be connected adjacent to one of the pluratliy of first valves, so that the fluid is able to be aspirated from another one of the plurality of inlets into the measuring cell.

Moreover, an additional first valve may be provided to isolate the outlet. The pump may be situated on one fluid inlet line, typically as the sample line. This may inhibit the ability of the pump to aspirate that fluid, but ensure that, when aspirating other fluids, only the sample fluid may be drawn into the pump. Since reagent fluids may be aggressive, this may prolong pump lifetime. This may be useful where the sample connected to the sample line may be pressurised and may not require pumping. In this case, a further first valve may be required on the outlet.

According to another embodiment, the fluid delivery system may further comprise a control unit that may be configured to alternatively open the plurality of first valves to allow the sample liquid and/or the reagent liquid being aspirated and drawn into the measuring cell via the at least one inlet.

In particular, the control unit may be configured to allow the sample liquid or the reagent liquid being aspirated drawn into the measuring cell by means of the pump or under their own fluid presuure.

Additionally, the control unit may be configured to open the first valves in turn or in a predefined sequence, so that, by activating the pump at the correct times, the correct mixture may be drawn into the measuring cell, enabling precise chemical mixtures to be created for analytical purposes, such as colorimetry or titration.

Moreover, a mixing device may be provided within or upstream of the measurement cell such that contents of the measurement cell can be thoroughly mixed, and such that any fluids aspirated from the measurement cell by the pump can be assured to be homogeneous.

According to a second aspect, a chemical analysis system is provided, which comprises a fluid delivery system of the present disclosure and a measuring cell, which comprises at least one inlet and configured to allow a fluid to be measured when flowing into the measuring cell via the at least one inlet.

According to a third aspect, the use of a fluid delivery system of the present disclosure is provided in a chemical analysis system.

The fluid delivery system having the single pump for multiple first valves may advantageously be a flexible and cost effective system within a chemical analysis system

According to a fourth aspect, a method is provided for operating a fluid delivery system for a chemical analysis system. The method comprises the following steps:
- arranging at least one first valve at at least one inlet of a measuring cell and a pumping system comprising a pump;
- opening the at least one first valve for allowing the fluid being aspirated and drawn into the measuring cell via the at least one inlet;
- activating the pump of the pumping system for aspirating a fluid and drawing the fluid into the measuring cell from the at least one inlet.

According to an embodiment, the step of the opening the at least one first valve may comprise alternately opening, by means of a control unit, a plurality of first valves, each of which is connected to a sample liquid or a reagent liquid. The fluid may comprise at least one liquid, which may be the sample liquid, the reagent liquid and/or a mixture of the sample liquid and the reagent liquid.

According to another embodiment, the method may further comprise the step of disconnecting, by means of a second valve of the pumping system, the pump from the measuring cell and/or isolating the pump from the fluid delivery system.

Optionally, the method may further comprise the step of arranging the second valve between the outlet of the measuring cell and the pump.

Alternatively or additionally, the method may further comprise the step of allowing the pump, by means of a third valve of the pumping system, being emptied for disconnecting the pump from the measuring cell and/or for isolating the pump from the fluid delivery system. Optionally, the method may further comprise the step of arranging the second valve and the third valve on two different sides of the pump. Alternatively, the third valve may be arranged between the second valve and the pump.

For example, the third valve may be switched, by means of the control unit, to an open state to allow emptying the fluid section existing between the second valve and pump before the pump is disconnected or isolated.

There may be provided a computer program that comprises machine-readable instructions that, when executed by one or more computers and/or compute instances, cause the one or more computers and/or compute instances to perform a method for operating a fluid delivery system for a chemical analysis system.

There may be provided a non-transitory machine-readable data carrier and/or a download product with the computer program. A download product is an instance of the computer program that may be sold and downloaded online for immediate fulfilment in lieu of physically shipping a machine-readable data carrier.

There may be provided one or more computers and/or compute instances with the computer program comprising machine-readable instructions that, when executed by one or more computers and/or compute instances, cause the one or more computers and/or compute instances to perform a method for operating a robot arm for an automation system, and/or with the machine-readable data carrier and/or download product with the computer program.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

It should be noted that the above examples may be combined with each other irrespective of the aspect involved. Accordingly, the method may be combined with structural features and, likewise, the apparatus and the system may be combined with features described above with regard to the method.

These and other aspects will be apparent from and elucidated with reference to the embodiments as per the drawings described hereinafter.

### BRIEF DESCRIPTION OF THE FIGURES

Examples of the disclosure will be described in the following with reference to the following drawings.
- Fig. 1: shows schematically an example of a fluid delivery system according to the present disclosure;
- Fig. 2: shows schematically another example of a fluid delivery system according to the present disclosure;
- Fig. 3: shows schematically another example of a fluid delivery system according to the present disclosure;
- Fig. 4: shows schematically another example of a fluid delivery system according to the present disclosure;
- Fig. 5: shows schematically another example of a fluid delivery system according to the present disclosure;
- Fig. 6: shows schematically another example of a fluid delivery system according to the present disclosure;
- Fig. 7: shows schematically another example of a fluid delivery system according to the present disclosure;
- Fig. 8: shows schematically another example of a fluid delivery system according to the present disclosure;
- Fig. 9: shows schematically another example of a fluid delivery system according to the present disclosure;
- Fig. 10: shows schematically a circuit construction of a fluid delivery system according to the present disclosure;
- Fig. 11: shows schematically a flow chart illustrating a method for operating a fluid delivery system for a chemical analysis system according to the present disclosure.

The figures are merely schematic representations and serve only to illustrate examples of the disclosure. Identical or equivalent elements are in principle provided with the same reference signs.

### DETAILED DESCRIPTION OF EMBODIMENTS

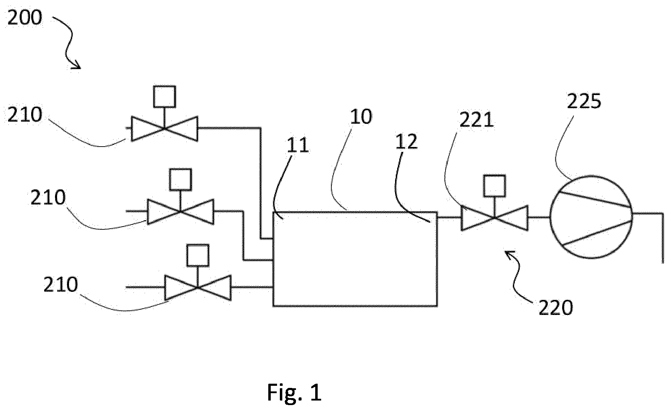

Fig. 1 shows schematically an example of a fluid delivery system 200 for a chemical analysis system. The fluid delivery system 200 comprises a measuring cell 10, a plurality of first valves 210, namely three first valves 210, and a pumping system 220 that comprises a pump 225.

The measuring cell 10 comprises at least one inlet 11, for example three inlets in Fig. 1, at a first end or a first side and an outlet 12 at a second end or a second side being arranged opposite to the first side. The measuring cell 10 is configured to measure a fluid when flowing from the at least one inlet 11 into the measurement cell 10. For example, the measuring cell 10 may be designed as a cuvette or a flow cell having a rectangular or cylindrical shape and comprise a predefined length of path, into which the fluid may flow for the chemical analysis measurement.

The fluid may comprise at least one liquid, which may be a sample liquid, a reagent liquid, and/or a mixture liquid of the same liquid and the reagent liquid.

As shown in Fig. 1, the pumping system comprises a single pump 225 at the outlet 12, while multiple first valves 210 are provided at the respective inlets 11. Each of the three valves 210 may be provided for the sample liquid or the reagent liquid. For example, two of the three first valves 210 may be provided for two various reagent liquids, while the remaining one first valve 210 may be provided for a sample liquid. As such, the single pump 225 may serve as a common pump for the multiple first valves 210.

The pump 225 of the pumping system 220 may be configured to aspirate the fluid and draw the fluid into the measuring cell 10 from the three inlets 11 towards the single common outlet 12, by means of the only common pump 225. In other words, the single pump 225 may be configured to aspirate one of the two various reagent liquids from one of the two respective inlets 11, via the two respective first valves 210, or to aspirate the sample liquid from the the remaining inlet 11 via the remaining respective first valve 210.

In Fig. 1, the pump 225 may be, but not limited to, a solenoid dosing pump, a syringe pump, a vacuum pump or a peristaltic pump.

Fig. 1 shows further that, by using the single, common pump 225, the first valves 210 may, respectively, be configured to be opened for allowing the fluid, namely one of the two reagent liquids or the sample liquids, being aspirated and drawn into the measuring cell 10 via the respective inlet 11.

The first valve 210 may be, but not limited to, a solenoid valve, a pneumatic valve or a diaphragm valve.

The use of the common pump 225 as shown in Fig. 1 may advantageously result in a more compact design of the fluid delivery system 200, and a reduced cost due to the saved implementation of multiple pumps for the multiple valves 210.

Optionally, the pumping system 220 in Fig. 1 may further comprise a second valve 221, which may be arranged between the measuring cell 10 and the pump 225 and configured to allow the pump 225 being disconnected from the measuring cell 10 and/or being isolated from the fluid delivery system 200.

Additionally or additionally, the pumping system 220 may further comprise a third valve (not shown), which may be configured to allow the pump 225 being emptied for disconnecting the pump 225 from the measuring cell 10 and/or for isolating the pump 225 from the fluid delivery system 200. For example, the third valve may be arranged at one side of the pump 225, while the second valve 221 may be arranged at the other side of the pump 225.

Hence, the whole pumping system 220 comprising the pump 225 and the second valve 221 and/or the third valve may be arranged at the outlet of the measuring cell 10 or connected to the downstream side of the measurement volume of the fluid in the measuring cell 10, while all the first valves 210 may be connected to the upstream side of the measurement volume. The second valve 221 and/or the third valve may be a same type of valve as the first valve 210 or a different type of valve than the first valve 210.

The measurement volume between the inlet 11 of the valve seats of the first valves 210 and the outlet 12 or the pump 225 may form a pressure boundary. It may be of relevance that the mechanical layout of the measurement cell 10 and the valve connections at the inlets 11 and the valve and pump connection at the outlet 12 may be designed so that all air may be expelled from the system and displaced by the fluid or liquid.

Due to the incompressibility of the fluid, the fluid delivery system 200 may be designed so that any volumetric aspiration by the pump 225 may result in the same volume of the fluid being drawn into the measuring cell 10 via the respective first valve 210 and the respective inlet 11.

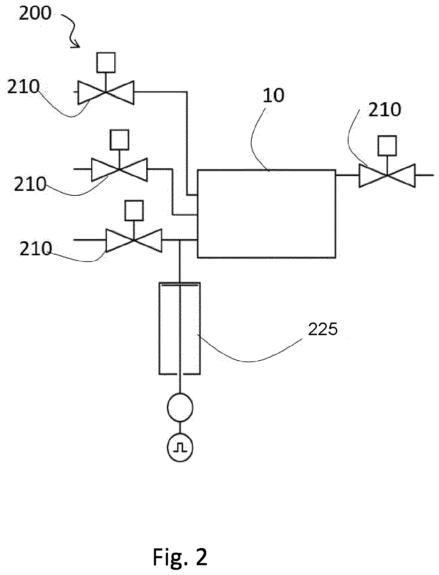

Fig. 2 shows another embodiment of the design of the fluid delivery system 200 that the pump 225, for example a syringe pump, may only be connected to one of the plurality of first valves 210, in particular adjacent to one of the plurality of the first valves, so that the fluids may be aspirated or drawn from the other first valves which are not located adjacent to the pump 225 into the measuring cell 10, but not the fluid from the one valve 210 situated adjacent to the pump.

The arrangement of the fluid delivery system 200 may be an advantageous arrangement, as it may allow the fluid from the inlet adjacent to the pump to flow into the measuring cell 10 under its own pressure. Further, The arrangement may allow the pump to only be subject to the fluid from the repective inlet, to which the one first valve 210 are connected along with the pump 225. Optionally, the fluid may be designed to be pumped via dispensing, by closing or opening an outlet valve.

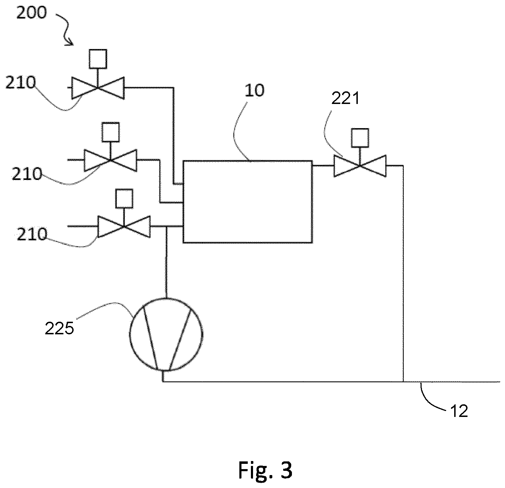

Further, alternative arrangement of the fluid delivery systems 200 are shown, respectively, in Fig. 3 to Fig. 9.

Fig. 3 shows an alternative arrangement of fluid delivery system 200 to that of Fig. 1. In this arrangement, the pump 225 is also merely connected to the lowest first valve 210. A second valve 221, which is arranged at an opposite side of the measuring cell 10 to the three first valve 210, and the pume 225 are connected, respectively, to the outlet 12. The fluid on the lowest first valve 210 may not be aspirated into the measuring cell 10 by the pump 225, as shown in Fig. 3. Therefore, it is mandatory that this line is pressurized thus opening the inlet and outlet line for the fluid, which may flow through the measuring cell 10 without the use of the pump 225.

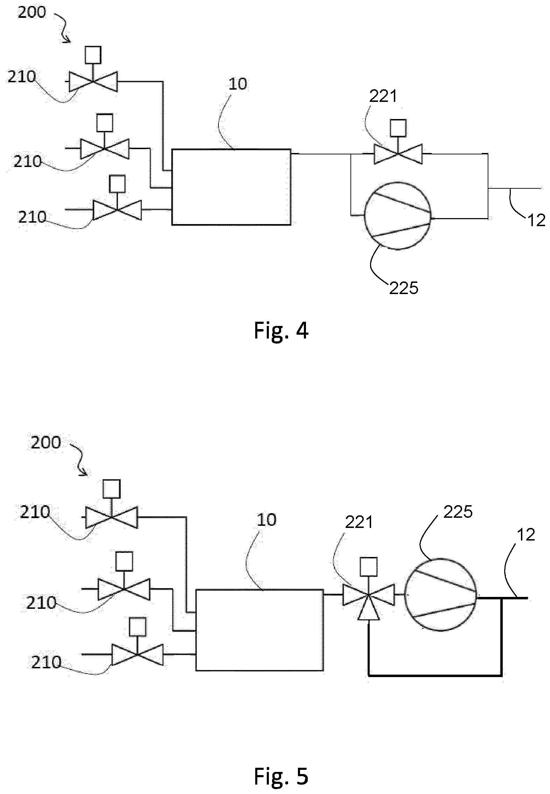

Fig. 4 shows a further example of the fluid delivery system 200, in which the second valve 221 may be provided for bypassing the pump 225. As an additional valve, the second valve 221 may be provided in bypass of the pump 225 so that if any fluid is pressurized, for example with a pressurized sample line from a pipe vor a vessel, the pressurized fluid may flow through the measuring cell 10 wihout necessating the use of the pump 225.

Fig. 5 shows a further example of the fluid delivery system 200, in which the second valve 221 may be provided to allow isolating the pump 225 and bypassing the pump 225, as the second valve 221 may be arranged between the measuring cell 10 and the pump 225 and is connected to the pump 225, which is further connected to the outlet 225, and in parallel directly to the outlet 12. The second valve 221 may thus be designed to be a three-port valve to allow the fluid flowing either via the pump 225 to the outlet 12 or directly to the outlet 12 by bapassing the pump 225.

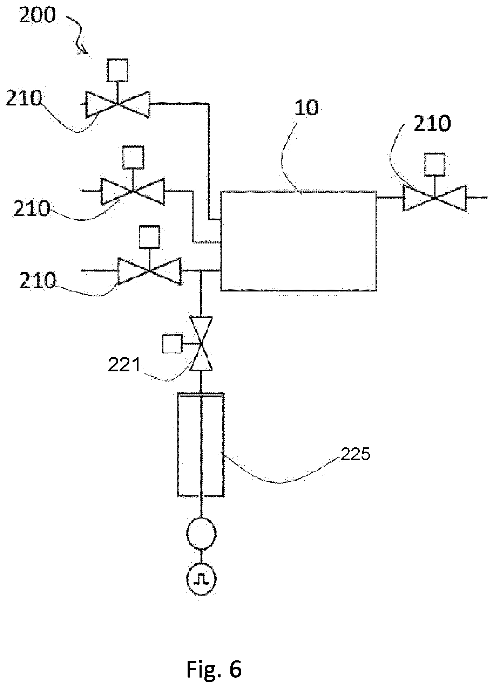

Fig. 6 shows a further example of the fluid delivery system 200 having the second valve 221, in which the second valve 221 is provided between the lowest first valve 210 and the syringe pump 221. The second valve 221 and the connected syringe pump 225 are connected to the lowest first valve 210 as the only one of the plurality of first valves 220. The second valve 221 may be configured to isolate the syrimge pump 225 connected to the fluid inlet.

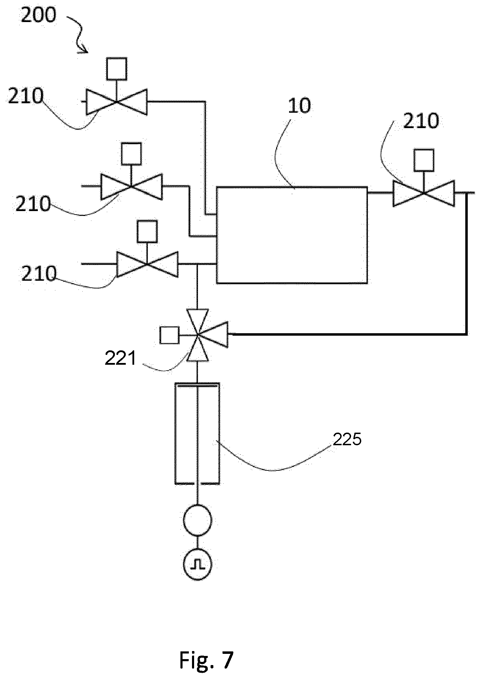

Fig. 7 shows a further example of the fluid delivery system 200 with the second valve 221 for isolating the pump 225 and emptying the fluid. Compared to the arrangement as shown in Fig. 7, the second valve 221 is interconnected to the lowest first valve 210 arranged at one side of the measuring cell 10, a further first valve 210 arranged at the opposite side of the measuring cell 10 and the syringe pump 225. The second valve 221 is a three-port valve and a diffenrent type of valve from the further two-port first valve 210.

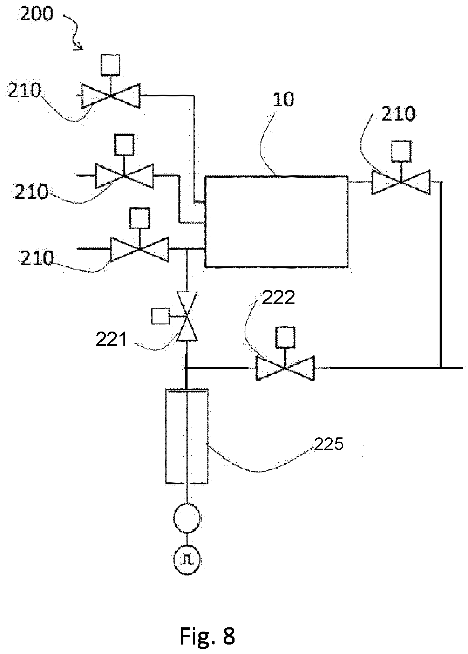

Fig. 8 shows a further example of the fluid delivery system 200 comprising the second valve 221, which may be configured to allow isolating the pump 225, and a third valve 222, which may be configured to allow emptying the pump 225. Compared to the fluid delivery system 200 as shown in Fig. 7, the additional third valve 222 is provided to connect with the further first valve 210 being arranged at the oppositve side of the measuring cell 10 and the syringe pump 225.

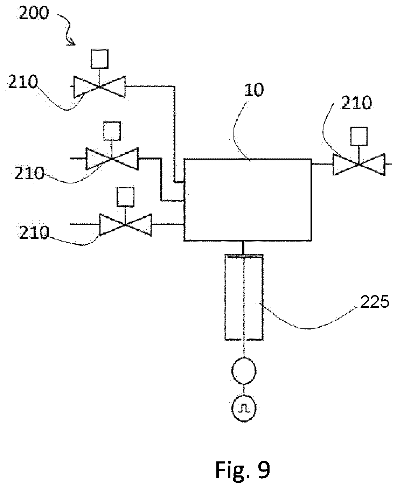

Fig. 9 shows a further example of the fluid delivery system 200, in which the pump 225 is connected directly to the measuring cell 10 with an additional first valve 210 connected to the outlet 12. Additionally, the second valve 221 and/or the third valve 222 may also be provided for isolating the pump 225 and/or emptying the fluid (not shown).

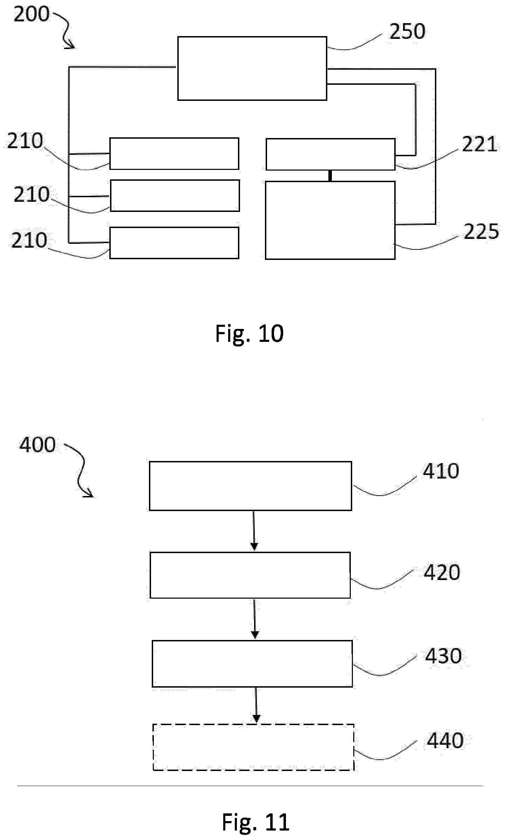

Fig. 10 shows schematically a circuit construction of a fluid delivery system 200, which may further comprise a control unit 250 that are connected to the multiple first valves 210 for switching frist valves 210, respectively, to be opened or closed, and connected to the pump 225 of the pumping system 220, in order to enable the pump 225 inspirating the fluid into the measuring cell 10. Further, the control unit 250 may be connected to the second valve 221, so that the second valve 221 may be opened to allow the pump 225 inspirating the fluid into the measuring cell 10.

Further, the control unit 250 may be configured to alternatively open the three first valves 210, in a predefined sequence or order and/or within predefined time intervals, to allow the sample liquid or the reagent liquid being aspirated and drawn, by means of the pump 225 or under their own fluid pressure, into the measuring cell 10 via the respective inlets 11 for the chemical analysis measurements.

Fig. 11 shows a flow chart illustrating an embodiment of a method 400 for operating a fluid delivery system 200 for a chemical analysis system.

In step 410, at least one first valve 210 may be arranged at at least one inlet 11 of a measuring cell 10 and a pumping system 220 comprising a pump 225. The pumpe may connected to the measuring cell 10.

In the following step 420, the at least one first valve 210 is opened for allowing the fluid being aspirated and drawn into the measuring cell 10 via the at least one inlet 11. In particular, a plurality of first valves 210 may be opened alternately, by means of a control unit 250. Each of the plurality of first valves 210 may be connected to a sample liquid or a reagent liquid. The fluid may comprise at least one liquid, which may be the sample liquid, the reagent liquid and/or a mixture liquid of the sample liquid and the reagent liquid.

In step 430, the pump 225 of the pumping system 220 is activated for aspirating a fluid and draw the fluid into the measuring cell 10 from the at least one inlet 11.

Alternatively or additionally, in step 440, the pump 225 of the pumping system 220 may be disconnected from the measuring cell 10 and/or isolated from the fluid delivery system 200 by means of a second valve 221 of the pumping system 220. Optionally, a further step may be provided, in which the second valve 221 may be arranged between the outlet 12 of the measuring cell 10 and the pump 225.

Optionally, a further step may be provided, in which a third valve may be provided in the pumping system 220 and the pump 225 may be allowed to be emptied, by means of the third valve, for disconnecting the pump 225 from the measuring cell 10 and/or for isolating the pump 225 from the fluid delivery system 200.

Optionally, further steps may be provided, in which the second valve 221 may be arranged between the measuring cell 10 and the pump 225, and in which the second valve 221 and the third valve may be arranged on two different sides of the pump 225.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SIGNS

- 10: measuring cell
- 11: first side
- 12: second side
- 200: fluid delivery system
- 210: first valve
- 220: pumping system
- 221: second valve
- 222: third valve
- 225: pump
- 250: control unit
- 400: method for operating a fluid delivery system
- 410: step of arranging at least one first valve and a pumping system
- 420: step of activating the pump
- 430: step of opening the at least one first valve
- 440: step of disconnecting the pump

## Claims

1. Fluid delivery system (200) for a chemical analysis system comprising a measuring cell (10), wherein the measuring cell (10) comprises at least one inlet (11) and configured to allow a fluid to be measured when flowing into the measuring cell (10) via the at least one inlet (11), comprising:
at least one first valve (210), arranged at the at least one inlet (11) of the measuring cell (10);
a pumping system (220) comprising a pump (225);
wherein the pump (225) of the pumping system (220) is configured to aspirate the fluid and draw the fluid into the measuring cell (10) from the at least one inlet (11);
wherein the at least one first valve (210) is configured to be opened for allowing the fluid being aspirated and drawn into the measuring cell (10) via the at least one inlet (11).

2. Fluid delivery system (200) according to claim 1,
wherein the pumping system (220) comprises a single pump (225).

3. Fluid delivery system (200) according to claim 1 or 2,
wherein the at least one first valve (210) is a solenoid valve, a pneumatic valve or a diaphragm valve.

4. Fluid delivery system (200) according to one of the preceding claims,
wherein the at least one inlet (11) comprises a plurality of inlets and the at least one first valve (210) comprises a plurality of first valves, each of which is arranged at one of the plurality of inlets;
wherein each of the plurality of first valves (210) is provided for a sample liquid or a reagent liquid;
wherein the fluid comprises at least one liquid, which is the sample liquid, the reagent liquid and/or a mixture liquid of the sample liquid and the reagent liquid.

5. Fluid delivery system (200) according to one of the preceding claims,
wherein the pumping system (220) further comprises a second valve (221), configured to allow the pump (225) being disconnected from the measuring cell (10) and/or being isolated from the fluid delivery system (200).

6. Fluid delivery system (200) according to one of the preceding claims,
wherein the pumping system (220) further comprises a third valve (222), configured to allow the pump (225) being emptied for disconnecting the pump (225) from the measuring cell (10) and/or for isolating the pump (225) from the fluid delivery system (200) and/or for allowing the the fluid to bypass the pump (225).

7. Fluid delivery system (200) according to claim 6,
wherein the second valve (221) and/or the third valve (222) are arranged with the pump (225) at the outlet (12) of the measuring cell (10).

8. Fluid delivery system (200) according to claim 6 or 9,
wherein the second valve (221) or the third valve (222) is a same type of valve as or a different type of valve than the at least one first valve (210).

9. Fluid delivery system (200) according to claim 4,
wherein the pump (225) of the pumping system (220) is connected adjacent to one of the plurality of first valves (221), so that the fluid is able to be aspirated from another one of the plurality of inlets (11) into the measuring cell (10).

10. Fluid delivery system (200) according to one of the preceding claims 4 to 9, further comprising:
a control unit (250), configured to alternatively open the plurality of first valves (210) to allow the sample liquid and/or the reagent liquid being aspirated and drawn into the measuring cell (10) via the at least one inlet (11).

11. Chemical analysis system comprising:
a fluid delivery system (200) according to one of the preceding claims 1 to 10; and
a measuring cell (10), wherein the measuring cell (10) comprises at least one inlet (11) and configured to allow a fluid to be measured when flowing into the measuring cell (10) via the at least one inlet (11).
a fluid delivery system (200) according to one of the preceding claims 1 to 10; and
a measuring cell (10), wherein the measuring cell (10) comprises at least one inlet (11) and configured to allow a fluid to be measured when flowing into the measuring cell (10) via the at least one inlet (11).

12. Use of a fluid delivery system (200) according to one of the claims 1 to 10 in a chemical analysis system according to claim 11.

13. Method (400) for operating a fluid delivery system (200) for a chemical analysis system, comprising the steps of:
arranging (410) at least one first valve (210) at at least one inlet (11) of a measuring cell (10) and a pumping system (220) comprising a pump (225);
opening (420) the at least one first valve (210) for allowing the fluid being aspirated and drawn into the measuring cell (10) via the at least one inlet (11);
activating (430) the pump (225) of the pumping system (220) for aspirating a fluid and drawing the fluid into the measuring cell (10) from the at least one inlet (11).

14. Method according to claim 13,
wherein the opening (430) the at least one first valve (210) comprises alternately opening, by means of a control unit (250), a plurality of first valves (210), each of which is connected to a sample liquid or a reagent liquid;
wherein the fluid comprises at least one liquid, which is the sample liquid, the reagent liquid and/or a mixture liquid of the sample liquid and the reagent liquid.

15. Method according to claim 13 or 14, further comprising the steps of:
disconnecting (440), by means of a second valve (221) of the pumping system (220), the pump (225) from the measuring cell (10) and/or isolating the pump (225) from the fluid delivery system (200); and/or
allowing the pump (225), by means of a third valve (222) of the pumping system (220), being emptied for disconnecting the pump (225) from the measuring cell (10) and/or for isolating the pump (225) from the fluid delivery system (200).
